# EUROPÄISCHE PATENTSCHRIFT

(11) **EP 1 129 123 B1**
(45) Veröffentlichungstag und Bekanntmachung des Hinweises auf die Patenterteilung: **23.05.2007**
(21) Anmeldenummer: 99953784.8
(22) Anmeldetag: 12.10.1999
(51) Int. Cl.: C08G 64/40

(54) **REINIGUNG VON POLYCARBONAT ENTHALTENDEN LÖSUNGEN**
PURIFICATION OF SOLUTIONS CONTAINING POLYCARBONATE
PURIFICATION DE SOLUTIONS CONTENANT UN POLYCARBONATE

(30) Priorität: 24.10.1998 DE 19849004
(43) Veröffentlichungstag der Anmeldung: 05.09.2001
(73) Patentinhaber: Bayer MaterialScience AG, 51368 Leverkusen (DE)
(72) Erfinder: BAXENDELL, Richard, Amherst, MA 01002 (US); KORDS, Christian, D-47829 Krefeld (DE); RAND, Lora, D-47800 Krefeld (DE); HEUSER, Jürgen, D-47803 Krefeld (DE)
(86) Internationale Anmeldenummer: PCT/EP1999/007653
(87) Internationale Veröffentlichungsnummer: WO 2000/024806

(56) Entgegenhaltungen:
- EP-A- 0 014 462

## Beschreibung

Die Erfindung betrifft ein Verfahren zur Herstellung von hochreinen Polycarbonaten sowie ein Verfahren zur Reinigung von Polycarbonat enthaltenden Lösungen.

Zur Herstellung von Polycarbonaten nach dem sogenannten Phasengrenzflächenverfahren werden Dihydroxydiarylalkane in Form ihrer Alkalisalze mit Phosgen in heterogener Phase in Gegenwart von anorganischen Basen wie Natronlauge und einem organischen Lösungsmittel, in dem das Produkt Polycarbonat gut löslich ist, umgesetzt. Während der Reaktion ist die wäßrige Phase in der organischen Phase verteilt und nach der Reaktion wird die organische, Polycarbonat enthaltende Phase von der wäßrigen abgetrennt und mehrmals mit einer wäßrigen Flüssigkeit gewaschen, wobei unter anderem Elektrolyte, Restmonomere und Katalysator entfernt werden sollen, und die Waschflüssigkeit anschließend möglichst weitgehend abgetrennt.

Nach dem Waschen der organischen, Polycarbonat enthaltenden Lösung mit einer wäßrigen Waschflüssigkeit wird eine milchig trübe Flüssigkeit gewonnen. Das Abtrennen der salzhaltigen, wäßrigen Phase von der Polycarbonat enthaltenden organischen Phase erfolgt üblicherweise in mehreren Stufen mittels sogenannter Phasentrennvorrichtungen, die wie Zentrifugen arbeiten und in denen die organische Lösung von der wäßrigen Flüssigkeit aufgrund unterschiedlicher Dichten getrennt werden.

Aus der DE 195 10 061 A1 ist ein Reinigungsverfahren für Polycarbonate bekannt, in dem die aus dem Herstellungsverfahren erhältliche Mischung aus Polycarbonat enthaltender, organischer Phase und salzhaltiger, wäßriger Phase in einer ersten Trennstufe in die beiden Phasen getrennt, die organische Phase anschließend mit verdünnter Mineralsäure zur Entfernung von gegebenenfalls verbliebenem Katalysator vermischt und gewaschen, das entstandene Zweiphasengemisch zunächst in einer nach dem Prinzip einer Zentrifuge arbeitenden Phasentrennvorrichtung von der wäßrigen Phase größtenteils befreit, die verbliebene Polycarbonat enthaltende organische Phase gegebenenfalls über einen oder mehrere Coalescer zur Befreiung von anhaftendem salzhaltigem Restwasser geleitet und der Waschvorgang sowie das Auftrennen der Phasen in der zuvor beschriebenen Weise mehrmals wiederholt wird. Die in diesem Verfahren verwendeten Coalescer sind mit einem Material mit stark hydrophober Oberfläche wie Polypropylenfasern oder Polytetrafluorethylenfasern bepackt.

Gegenüber diesem bekannten Verfahren liegt der Erfindung die Aufgabe zugrunde, ein Reinigungsverfahren zur Reinigung von Polycarbonat enthaltenden Lösungen und ein Verfahren zur Herstellung von Polycarbonaten bereitzustellen, welches hinsichtlich der Störanfälligkeit und der Wirtschaftlichkeit verbessert und darüber hinaus ein noch reineres Endprodukt, d.h. reineres Polycarbonat, Copolycarbonat oder Polyestercarbonat ermöglicht.

Gelöst wird diese Aufgabe durch ein Verfahren zur Herstellung von Polycarbonat nach dem Phasengrenzflächenverfahren, in dem eine Polycarbonat enthaltende Lösung mit einer wäßrigen Waschflüssigkeit gewaschen, die wäßrige Waschflüssigkeit von der Polycarbonat enthaltenden Lösung abgetrennt und das Lösungsmittel abgedampft wird, wobei man die organische Polycarbonat enthaltende Lösung und die Waschflüssigkeit nach einer ersten Waschstufe in einem mit hydrophilen Material bepackten Coalescer und mit Schichtdicken des Faserbettes von 3 bis 7 mm voneinander trennt.

Die Erfindung betrifft ferner ein Verfahren zur Reinigung von Polycarbonat enthaltenden Lösungen, in dem die Polycarbonat enthaltende Lösung mit einer wäßrigen Waschflüssigkeit gewaschen, die wäßrige Waschflüssigkeit von der Polycarbonat enthaltenden Lösung abgetrennt und das Lösungsmittel abgedampft wird, wobei man die organische Polycarbonat enthaltende Lösung und die Waschflüssigkeit nach der ersten Waschstufe in einem mit hydrophilen Material bepackten Coalescer und mit Schichtdicken des Faserbettes von 3 bis 7 mm voneinander trennt.

Überraschend hat sich gezeigt, daß es nicht erforderlich ist, nach Polymerisation, Trennung der organischen von der wäßrigen Phase und dem ersten Waschen der organischen Phase die erste Trennung von organischer Phase und Waschwasser mit einer seit Jahrzehnten verwendeten Zentrifuge durchzuführen. Ferner war nicht zu erwarten, daß sogar gänzlich auf diese bekannten, nach dem Prinzip einer Zentrifuge arbeitenden Phasentrennelemente verzichtet werden kann, wenn sie durch Coalescer mit einer hydrophilen Bepackung ersetzt werden.

In bekannten Waschverfahren zur Reinigung von Polycarbonat enthaltenden Prozeßströmen wurde im Polycarbonat vor der ersten Waschstufe ein Natriumgehalt von 250 ppm und nach der dritten Waschstufe 0,078 ppm ermittelt. Wird ein solcher Prozeßstrom geteilt und der abgetrennte Teil in einer mehrstufigen Coalescer-Waschstraße gewaschen, wird hinter dem dritten Coalescer ein Natriumgehalt von nur 0,038 ppm im Polycarbonat gemessen.

Zur Phasentrennung zu verwendende Coalescer sind marktübliche Coalescer wie sie beispielsweise von den Firmen Pall GmbH, D-63303 Dreieich oder Franken Filtertechnik OHG, D-50354 Hürth, vertrieben werden mit einer hydrophilen Bepackung. Gemäß einer besonderen Ausführungsform des erfindungsgemäßen Verfahrens werden als hydrophile Bepackung Metallfasern eingesetzt, wobei Edelstahlfasern besonders bevorzugt sind. Die Metallfasern besitzen beispielsweise einen Durchmesser von 2 bis 50 µm, 3 bis 7 µm und gemäß einer besonders bevorzugten Ausführungsform 4,5 bis 5,5 µm. Gemäß einer weiteren bevorzugten Ausführungsform können beispielsweise Metallfasern unterschiedlicher Dicke in den Coalescern vorhanden sein. So hat sich die Kombination von Metallfasern mit Faserdicken von 2 mm und 10 mm als besonders wirkungsvoll zur Phasentrennung erwiesen. Die Schichtdicke des Faserbetts beträgt 3 bis 7 mm. Es ist erwünscht, daß der Durchsatz pro Phasenelement etwa 0,5 bis 5 m³/h und besonders bevorzugt 1,8 bis 2,2 m³/h beträgt.

Die organische Polycarbonat enthaltende Phase kann beispielweise 3 bis 5 mal mit einer wäßrigen Flüssigkeit gewaschen werden, wobei das erhaltene Zweiphasengemisch anschließend in einem Coalescer jeweils in organische und wäßrige Phase getrennt wird.

Die weiteren zur Phasentrennung einzusetzenden Trennelemente in der Ausführungsform der Erfindung, derzufolge ein Coalescer nur zur ersten Abtrennung von Waschwasser eingesetzt wird, sind vorzugsweise die in der Vergangenheit zur Phasentrennung eingesetzten Zentrifugen.

Ein besonderer Vorteil derjenigen Ausführungsform der Erfindung, derzufolge zur Phasentrennung ausschließlich Coalescer eingesetzt werden, besteht darin, daß die Konzentration an Polycarbonat in der organischen Phase höher sein kann als in derjenigen Ausführungsform, in der zur Phasentrennung die bekannten Zentrifugen eingesetzt werden. Darf die Polycarbonatkonzentration in der organischen Phase in letzteren Verfahren nicht größer als 14 Gew.-% sein, bezogen auf das Gewicht der wasserfreien organischen Phase, so ermöglicht der ausschließliche und erfindungsgemäße Einsatz von Coalescern zur Phasentrennung eine Polycarbonatkonzentration während des Waschens von 15 bis 20 Gew.-%, bezogen auf das Gewicht der organischen Phase. Bei diesen Konzentrationen weist die organische Phase beispielsweise eine Viskosität von 100 bis 1400 mPas, vorzugsweise 150 bis 1000 mPas und gemäß einer besonders bevorzugten Ausführungsform 180 bis 700 mPas auf.

Gemäß einer weiteren Ausführungsform der Erfindung werden zum Einmischen der Waschflüssigkeit Mischpumpen, insbesondere Kreiselpumpen, oder Mischdüsen eingesetzt. Bei Einmischen der Waschflüssigkeit durch diese Aggregate konnte eine Erhöhung der Reinheit des Polycarbonats um den Faktor 2 gegenüber der Verwendung von statischen Mischern erzielt werden.

Die erfindungsgemäß zu reinigenden oder herzustellenden Polymere sind Polycarbonate, sowohl Homopolycarbonate als auch Copolycarbonate und deren Gemische. Die erfindungsgemäßen Polycarbonate können aromatische Polyestercarbonate sein oder Polycarbonate, die im Gemisch mit aromatischen Polyestercarbonaten vorliegen. Der Begriff Polycarbonat wird anschließend stellvertretend für die zuvor genannten Polymere verwendet.

Das erfindungsgemäße Polycarbonat wird nach dem sogenannten Phasengrenzflächenverfahren erhalten (H. Schnell "Chemistry and Physics of Polycarbonates", Polymer Reviews, Vol. 9, S. 33ff, Interscience Publishers, New York (1964).

Erfindungsgemäß als Ausgangsverbindungen bevorzugt einzusetzende Verbindungen sind Bisphenole der allgemeinen Formel HO-Z-OH, worin Z ein divalenter organischer Rest mit 6 bis 30 Kohlenstoffatomen ist, der eine oder mehrere aromatische Gruppen enthält. Beispiele solcher Verbindungen sind Bisphenole, die zu der Gruppe der Dihydroxydiphenyle, Bis(hydroxyphenyl)alkane, Inganbisphenole, Bis(hydroxyphenyl)ether, Bis(hydroxyphenyl)sulfone, Bis(hydroxyphenyl)ketone und α,α'-Bis(hydroxyphenyl)diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), Bisphenol-Trimethyleyelohexanon (BP-TMC) sowie gegebenenfalls deren Gemische. Besonders bevorzugte Copolycarbonate sind solche auf der Basis der Monomere Bisphenol-A und 1,1-Bis-(4-hydroxyphenyl)-3,5-trimethylcyclohexan. Die erfindungsgemäß einzusetzenden Bisphenolverbindungen werden mit Kohlensäureverbindungen, insbesondere Phosgen, umgesetzt.

Die erfindungsgemäßen Polyestercarbonate werden durch Umsetzung der bereits genannten Bisphenole, mindestens einer aromatischen Dicarbonsäure und gegebenfalls Kohlensäure erhalten. Geeignete aromatische Dicarbonsäuren sind beispielsweise Orthophtalsäure, Terephthalsüure, Isophthalsäure, 3,3'- oder 4,4'-Diphenyldicarbonsäure und Benzophenondicarbonsäuren.

In dem Verfahren verwendete inerte organische Lösungsmittel sind beispielsweise Dichlormethan, die verschiedenen Dichlorethane und Chlorpropanverbindungen, Chlorbenzol und Chlortoluol, vorzugsweise werden Dichlormethan und Gemische aus Dichlormethan und Chlorbenzol eingesetzt.

Die Reaktion kann durch Katalysatoren, wie tertiäre Amine, N-Alkylpiperidine oder Oniumsalze beschleunigt werden. Bevorzugt werden Tributylamin, Triethylamin und N-Ethylpiperidin verwendet. Als Kettenabbruchmittel und Molmassenregler können ein monofunktionelles Phenol, wie Phenol, Cumylphenol, p.-tert.-Butylphenol oder 4-(1,1,3,3-Tetramethylbutyl)phenol verwendet werden. Als Verzweiger kann beispielsweise Isatinbiscresol eingesetzt werden.

Zur Herstellung der erfindungsgemäßen hochreinen Polycarbonate werden die Bisphenole in wässriger alkalischer Phase, vorzugsweise Natronlauge, gelöst. Die gegebenenfalls zur Herstellung von Copolycarbonaten erforderlichen Kettenabbruchmittel werden in Mengen von 1,0 bis 20,0 Mol-% je Mol Bisphenol, in der wäßrigen alkalischen Phase gelöst oder zu dieser in einer inerten organischen Phase in Substanz zugegeben. Anschließend wird Phosgen in den die übrigen Reaktionsbestandteile enthaltenden Mischer eingeleitet und die Polymerisation durchgeführt.

Ein Teil, bis zu etwa 80 Mol-%, vorzugsweise 20 bis 50 Mol-% der Carbonat-Gruppen in den Polycarbonaten können durch aromatische Dicarbonsäureester-Gruppen ersetzt sein.

Die thermoplastischen Polycarbonate haben mittlere Molekulargewichte M_{w} (ermittelt durch Messung der relativen Viskosität bei 25°C in Dichlormethan und einer Konzentration von 0,5 g Polycarbonat/100 ml Dichlormethan) von 12.000 bis 400.000, vorzugsweise von 12.000 bis 80.000 und insbesondere von 15.000 bis 40.000.

Während der Reaktion wird die wäßrige Phase in der organischen Phase emulgiert. Dabei entstehen Tröpfchen unterschiedlicher Größe. Nach der Reaktion erfolgt eine Phasentrennung in organische, das Polycarbonat enthaltende Phase und eine wäßrige Phase. Anschließend wird die organische, das Polycarbonat enthaltende Phase, üblicherweise mehrmals mit einer wäßrigen Flüssigkeit gewaschen und nach jedem Waschvorgang von der wäßrigen Phase soweit wie möglich getrennt. Zum Einmischen der Säure und des Waschwassers können bekannte Mischaggregate wie Rührapparate und Statikmischer verwendet werden. Die Polymerlösung ist nach der Wäsche und Abtrennung der Waschflüssigkeit trüb. Die Waschflüssigkeit ist eine wäßrige Flüssigkeit und kann sowohl eine verdünnte Mineralsäure wie HCl oder H₃PO₄ als auch Wasser sein. Die Konzentration von HCl oder H₃PO₄ in der Waschflüssigkeit kann beispielsweise 0,5 bis 1,0 Gew.-% betragen. Die organische Phase kann beispielsweise fünfmal gewaschen werden.

Zum Erhalt des hochreinen Polycarbonats wird das Lösungsmittel abgedampft. Das Abdampfen kann in mehreren Verdampferstufen erfolgen. Gemäß einer weiteren bevorzugten Ausführungsform dieser Erfindung kann das Lösungsmittel oder ein Teil des Lösungsmittels durch Sprühtrocknung entfernt werden. Das hochreine Polycarbonat fällt dann als Pulver an. Gleiches gilt für die Gewinnung des hochreinen Polycarbonats durch Fällung aus der organischen Lösung.

Fig. 1 zeigt eine Ausführungsform des erfindungsgemäßen Verfahren, in der das Abtrennen der Waschflüssigkeit zunächst in einem hydrophil bepackten Coalescer und anschließend in den folgenden Waschstufen in Zentrifugen erfolgt.

Fig. 2 zeigt eine Ausführungsform, in der die Waschflüssigkeit jeder Waschstufe durch einen Coalescer abgetrennt wird und zum Waschen der das Polycarbonat enthaltenden Flüssigkeit keine nach Art einer Zentrifuge arbeitenden Phasentrennelemente eingesetzt sind.

Die erfindungsgemäß erhaltenen oder gereinigten hochreinen Polycarbonate eignen sich zur Herstellung von Formkörpern. Formkörper aus dem hochreinen Polycarbonat sind insbesondere optische und magnetooptische Datenspeicher wie Mini Disk, Compact Disk oder Digital Versatile Disk, optische Linsen und Prismen, Verscheibungen für Kraftfahrzeuge und Scheinwerfer, Verscheibungen anderer Art wie für Gewächshäuser, sogenannte Stegdoppelplatten oder Hohlkammerplatten. Hergestellt werden diese Formkörper durch Spritzgußverfahren, Extrusionsverfahren und Extrusions-Blasformverfahren unter Verwendung des erfindungsgemäß erhaltenen Polycarbonats mit dem geeigneten Molekulargewicht.

Der bevorzugte Molekulargewichtsbereich für die Datenträger beträgt 12.000 bis 22.000, für Linsen und Verscheibungen 22.000 bis 32.000 und derjenige von Platten und Hohlkammerplatten 28.000 bis 40.000. Alle Molekulargewichtsangaben beziehen sich auf das Gewichtsmittel der Molmasse.

Die Formkörper weisen gegebenenfalls eine Oberflächenvergütung auf, beispielsweise eine Kratzfestbeschichtung.

Zur Herstellung von optischen Linsen und Folien oder Scheiben für magnetooptische Datenträger werden die erfindungsgemäßen Polycarbonate vorzugsweise mit einem Molekulargewicht von 12.000 bis 40.000 eingesetzt, da sich ein Material mit einer Molmasse in diesem Bereich sehr gut thermoplastisch formen läßt. Die Formkörper können durch Spritzgußverfahren hergestellt werden. Dazu wird das Harz auf Temperaturen von 300 bis 400°C geschmolzen und die Form im allgemeinen auf einer Temperatur von 50 bis 140°C gehalten.

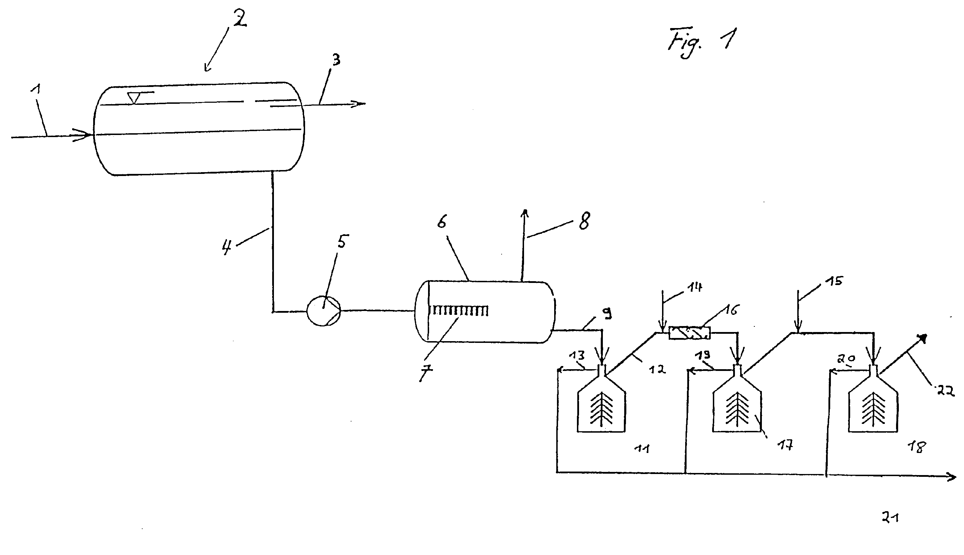

Unter Bezugnahme auf Fig. 1 wird nachfolgend beispielhaft die Behandlung des das Polycarbonat enthaltenden Flüssigkeitsstroms beschrieben. Die nach der Polymerisation nach dem Zweiphasen-Grenzflächenverfahren erhaltene Reaktionsemulsion 1 wird zur Durchführung einer Vortrennung in einem Phasentrennbehälter 2 in eine wäßrige, salzhaltige Phase 3 und in eine organische, das Polycarbonat enthaltene Phase 4 getrennt. Während die wäßrige Phase 3 der Abwasseraufbereitung zugeführt wird, pumpt man die organische Phase 4 mit der Pumpe 5 in einen Coalescer 6 mit einem Phasentrennelement 7, das einen Durchmesser von 150 mm und eine Länge von 1250 mm aufweist. Das Faserbett des Phasentrennelements 7 besteht aus Edelstahlfasern mit einem Durchmesser von etwa 5 µm. Die Schichtdicke des Faserbetts kann 6 mm betragen. 2100 1/h Polymerlösung wurden mit einem Differenzdruck von 500 mbar durch den Coalescer geleitet. Das in dem Coalescer abgeschiedene Restwasser 8 wird einer Abwasseraufbereitung zugeführt. Die organische Phase 9 wird dann in zwei hintereinander geschalteten Stufen mit einer wäßrigen Flüssigkeit 14/15 vermischt und dabei gewaschen. Zunächst wird die organische Phase 12 mit einer etwa 1 gew.-%igen HCl 14 in einem Statikmischer 16 gemischt und dabei gewaschen, um gegebenenfalls noch vorhandenen Katalysator zu entfernen. In der nächsten Stufe wird als Waschflüssigkeit voll entsalztes Wasser 15 verwendet, wobei das Vermischen der organischen, das Polycarbonat enthaltenden Phase wiederum in einem Statikmischer 16 erfolgt. Nach jedem Vermischen mit der wäßrigen Flüssigkeit wird das erhaltene Zweiphasengemisch mit den Zentrifugen 17/18 jeweils wieder getrennt. Die wäßrigen Phasen 19/20 werden aus den Zentrifugen abgezogen und mit der wäßrigen Phase 13 vereint und als Strom 21 der Abwasseraufbereitung zugeführt. Die organische Phase 22, deren Restwassergehalt bis auf <0,2 Gew.-% verringert worden ist, wird in ein Tanklager gepumpt. Die Temperatur der organischen Phase 22 beträgt während des Waschens 40 bis 50°C.

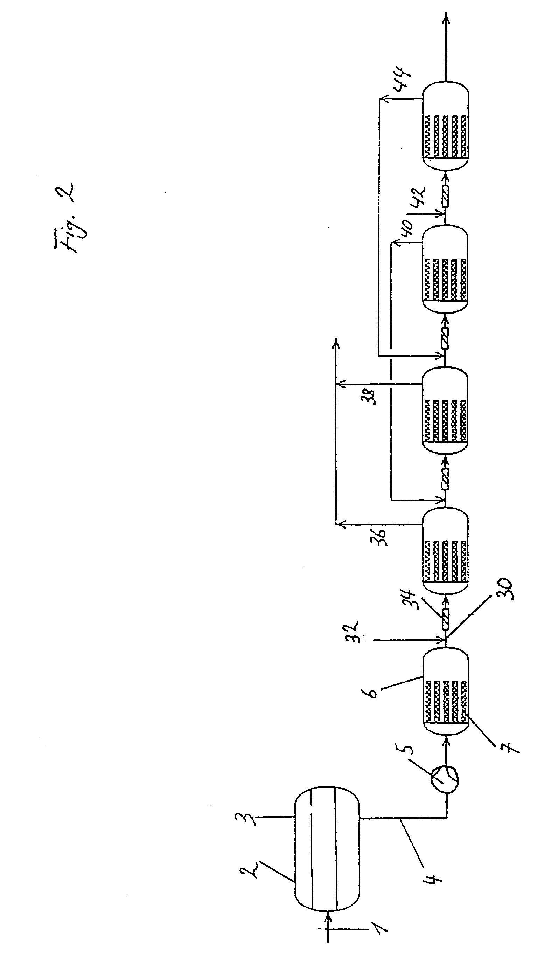

Die Verfahrensführung nach Fig. 2 erfolgt zunächst identisch mit derjenigen aus Fig. 1, wobei die Polycarbonatkonzentration in der organischen Phase 15% beträgt. Aus dem Coalescer 6 wird die organische Phase 30 in einen Statikmischer 34 geführt, um dort mit einer wäßrigen 1 gew.-%igen HCl vermischt und gewaschen zu werden. Das erhaltenen Gemisch wird in einen weiteren identisch aufgebauten Coalescer geleitet und dort die wäßrige von der organischen Phase getrennt. In der nächsten Stufe wird Wasser 40 zum Waschen verwendet, welches aus der Trennung von organischer und wäßriger Phase einer vorgeschalteten Trennstufe verwendet wird. Statt dessen könnte aber auch voll entsalztes Wasser verwendet werden. Die Ziffer 42 zeigt den Zusatz von voll entsalztem Wasser und die Ziffer 44 die Rückführung des gebrauchten Wassers zum Waschen in einer früheren Waschstufe an. Die wäßrigen Phasen 36/38 werden dem Abwasserkanal zugeführt und die organische Phase in ein Tanklager gepumpt. Die Temperatur der organischen Phase beträgt während der Reinigung 40 bis 50°C.

Die verwendeten Phasentrennlemente besitzen einen Durchmesser von 150 mm und eine Länge von 1250 mm. Die Faserbetten der Trennelemente bestehen aus Edelstahlfasern mit Faserdicken von etwa 2mm und etwa 5mm. Die Schichtdicke des Faserbetts beträgt 6mm. 2100 1/h wurden mit einem Differenzdruck von 500Pa (500 mbar) durch den Coalescer geleitet, wobei das an der organischen Restphase anhaftende Wasser auf weniger als 2 Gew.-% verringert werden konnte.

Zum Vergleich wurde dieselbe Versuchsanordnung gewählt, als Trennmittel aber lipophile PTFE-Fasergewebe verwendet. Bei einem Differenzdruck von 300mPa (3 bar) konnten nur 200 1/h durchgesetzt werden, wobei der Restwassergehalt der organischen Phase zwischen 0,2 und 0,45 Gew.-% lag.

## Patentansprüche

1. Verfahren zur Herstellung von Polycarbonat nach dem Phasengrenzflächenverfahren, in dem eine Polycarbonat enthaltende Lösung mit einer wässrigen Waschflüssigkeit mehrmals gewaschen, die wässrige Waschflüssigkeit von der Polycarbonat enthaltenden Lösung nach jeder Waschstufe durch Trennelemente abgetrennt und das Lösungsmittel abgedampft wird, **dadurch gekennzeichnet, dass** man die organische Polycarbonat enthaltende Lösung und die wässrige Waschflüssigkeit nach der ersten Waschstufe in einem Coalescer mit einer hydrophilen Bepackung und einer Schichtdicke des Faserbetts von 3 bis 7 mm voneinander trennt.

2. Verfahren zur Reinigung einer Polycarbonat enthaltenden Lösung, in dem die Polycarbonat enthaltende Lösung mit einer wässrigen Waschflüssigkeit mehrmals gewaschen und die wässrige Waschflüssigkeit von der Polycarbonat enthaltenden Lösung nach jeder Waschstufe mittels Trennelementen abgetrennt wird, **dadurch gekennzeichnet, dass** man die organische, das Polymer enthaltende Phase von einer wässrigen Waschflüssigkeit nach der ersten Waschstufe in einem Coalescer mit einer hydrophilen Bepackung und einer Schichtdicke des Faserbetts von 3 bis 7 mm als Trennelement abtrennt.

3. Verfahren nach einem der Ansprüche 1 oder 2, **dadurch gekennzeichnet, dass** man zur Trennung von organischer, das Polymer enthaltender Phase und wässriger Waschflitssigkeit in den weiteren Waschstufen Coalescer einsetzt.

4. Verfahren nach einem der Ansprüche 1 bis 3, **dadurch gekennzeichnet, dass** die hydrophile Bepackung eine Bepackung mit Metallfasern ist.

5. Verfahren nach Anspruch 4, **dadurch gekennzeichnet, dass** die Metallfasern Edelstahlfasern mit Faserdurchmessern von etwa 2 µm und etwa 10 µm sind.

6. Verfahren nach Anspruch 3, **dadurch gekennzeichnet, dass** man die organische Polycarbonat enthaltende Phase dreimal bis fünfmal mit einer wässrigen Flüssigkeit wäscht und das erhaltene Zweiphasengemisch in einem Coalescer trennt.

7. Verfahren nach einem der Ansprüche 1 bis 6, **dadurch gekennzeichnet, dass** man die Waschflüssigkeit über Mischpumpen, insbesondere eine Kreiselpumpe, oder mehrstufige Mischdüsen mit der organischen, das Polycarbonat enthaltenden Flüssigkeit vermischt.

8. Verfahren nach einem der Ansprüche 1 oder 3 bis 7, **dadurch gekennzeichnet, dass** man das erhaltene Polycarbonat zu einem Formkörper verarbeitet.

9. Verfahren nach Anspruch 8, **dadurch gekennzeichnet, dass** man die Verarbeitung zu einem Formkörper durch Spritzguß, Extrusion oder Blasformung vornimmt.

## Claims

1. A process for the production of polycarbonate by the phase boundary method, wherein a solution which contains polycarbonate is repeatedly washed with an aqueous washing liquid, the aqueous washing liquid is separated from the solution which contains polycarbonate after each washing stage by separating elements and the solvent is evaporated, **characterised in that** the organic solution which contains polycarbonate and the aqueous washing liquid are separated from each other after the first washing stage in a coalescer comprising a hydrophilic packing and with a layer thickness of the fibre bed of 3 to 7 mm.

2. A process for the purification of a solution which contains polycarbonate, wherein the solution which contains polycarbonate is repeatedly washed with an aqueous washing liquid and the aqueous washing liquid is separated from the solution which contains polycarbonate after each washing stage by means of separating elements, **characterised in that** the organic phase which contains the polymer is separated from an aqueous washing liquid after the first washing stage in a coalescer comprising a hydrophilic packing as separating element and with a layer thickness of the fibre bed of 3 to 7 mm.

3. A process according to either of claims 1 and 2, **characterised in that** coalescers are used in the further washing stages for the separation of an organic phase which contains the polymer from aqueous washing liquid.

4. A process according to one of claims 1 to 3, **characterised in that** the hydrophilic packing is a packing comprising metal fibres.

5. A process according to claim 4, **characterised in that** the metal fibres are stainless steel fibres with fibre diameters of about 2 µm and of about 10 µm.

6. A process according to claim 3, **characterised in that** the organic phase which contains polycarbonate is washed three to five times with an aqueous liquid and the two-phase mixture which is obtained is separated in a coalescer.

7. A process according to one of claims 1 to 6, **characterised in that** the washing liquid is mixed with the organic liquid which contains polycarbonate via mixer pumps, particularly via a centrifugal pump, or via multi-stage mixing nozzles.

8. A process according to one of claims 1 or 3 to 7, **characterised in that** the polycarbonate which is obtained is processed to form a moulding.

9. A process according to claim 8, **characterised in that** processing to form a moulding is effected by injection-moulding, extrusion or blow-moulding.

## Revendications

1. Procédé de production de polycarbonate selon la méthode interfaciale, dans lequel une solution contenant un polycarbonate est lavée à plusieurs reprises avec un liquide de lavage aqueux, ce dernier est séparé de la solution contenant le polycarbonate par des éléments séparateurs après chaque étape de lavage et le solvant est évaporé, **caractérisé en ce que** l'on sépare la solution organique contenant le polycarbonate et le liquide de lavage aqueux après la première étape de lavage dans un coalesceur présentant une charge hydrophile et une épaisseur de couche du lit de fibres comprise entre 3 et 7 mm.

2. Procédé de purification d'une solution contenant un polycarbonate, dans lequel la solution contenant le polycarbonate est lavée à plusieurs reprises avec un liquide de lavage aqueux et ce dernier est séparé de la solution contenant le polymère à l'aide d'éléments séparateurs après chaque étape de lavage, **caractérisé en ce que** l'on sépare la solution organique contenant le polycarbonate d'un liquide de lavage aqueux après la première étape de lavage dans un coalesceur présentant une charge hydrophile et une épaisseur de couche du lit de fibres comprise entre 3 et 7 mm comme élément séparateur.

3. Procédé selon une des revendications 1 ou 2, **caractérisé en ce que** l'on utilise un coalesceur lors des étapes ultérieures de lavage pour la séparation de la phase organique contenant le polymère et du liquide de lavage aqueux.

4. Procédé selon une des revendications 1 à 3, **caractérisé en ce que** la charge hydrophile est une charge avec des fibres métalliques.

5. Procédé selon la revendication 4, **caractérisé en ce que** les fibres métalliques sont des fibres en acier spécial possédant un diamètre compris entre environ 2 µm et environ 10 µm.

6. Procédé selon la revendication 3, **caractérisé en ce que** l'on lave la phase organique contenant le polycarbonate trois à cinq fois avec un liquide de lavage aqueux et on sépare le mélange diphasique obtenu dans un coalesceur.

7. Procédé selon une des revendications 1 à 6, **caractérisé en ce que** l'on mélange le liquide de lavage avec le liquide organique contenant le polycarbonate, au moyen de pompes mélangeuses, en particulier une pompe centrifuge ou des buses mélangeuses à plusieurs étages.

8. Procédé selon une des revendications 1 ou 3 à 7, **caractérisé en ce que** l'on transforme le polycarbonate obtenu en une pièce moulée.

9. Procédé selon la revendication 8, **caractérisé en ce que** l'on effectue la transformation en une pièce moulée par moulage par injection, extrusion ou soufflage.
